# EUROPEAN PATENT APPLICATION

(11) **EP 3 473 688 A1**
(43) Date of publication of application: **24.04.2019**
(21) Application number: 17197579.0
(22) Date of filing: 20.10.2017
(51) Int. Cl.: C09J 5/06, C09J 7/30, C09J 7/25, C09J 7/35, G09F 9/30, G09F 3/20

(54) **A RELEASABLE MULTILAYER ELECTRONIC UNIT, A METHOD FOR RELEASING SAID ELECTRONIC UNIT, AND A GARMENT WITH THE ELECTRONIC UNIT ATTACHED THERETO**

(71) Applicant: Nederlandse Organisatie voor toegepast- natuurwetenschappelijk onderzoek TNO, 2595 DA 's-Gravenhage (NL)
(72) Inventor: de Kok, Margaretha Maria, 2595 DA`s - Gravenhage (NL)
(74) Representative: V.O.

(57) **Abstract**

The invention relates to a releasable flexible multilayer electronic unit, a garment with the electronic unit attached thereto, and a method for releasing said electronic unit. The releasable multilayer electronic unit is flexible and connectable to a garment. The multilayer electronic unit comprises an encapsulation layer configured for encapsulating one or more electronic components, and an adhesion layer attached to the encapsulation layer and arranged for bonding the flexible multilayer electronic unit to the garment. The adhesion layer has material properties enabling debonding by means of a thermal debonding process for removal of the electronic unit when subjected to predetermined conditions different than damage conditions for at least one of the encapsulating layer or the one or more electronic components.

## Description

### FIELD OF THE INVENTION

The invention relates to a releasable flexible multilayer electronic unit connectable to a garment, a method for releasing a flexible multilayer electronic unit connected to a garment, and a garment having a releasable flexible multilayer electronic unit releasably attached thereto.

### BACKGROUND TO THE INVENTION

Portable electronic devices are increasingly used for various applications. There is a trend to include portable electronic devices in garments so as to obtain increased portable functionality. In this way, smart clothing can be obtained wherein the electronic devices are employed for various (portable) applications and tasks, such as for instance (tele)communication, medical monitoring, sensing (measurements), positioning (e.g. using a global positioning system), localization (e.g. within a space), costume lighting, medical monitoring, computing, etc. The garment attachable wearable electronic devices are typically reduced in size for allowing a convenient personal use.

There are different ways for attaching a wearable electronic device to the garment. Commonly the electronic devices are embedded in a garment, making them not releasable without causing damage to at least a portion of the electronic device. The electronic devices may also be attached to garments using adhesive means and/or mechanical attachment means. Electronic devices not being integrated to a level at which laminated electronics are (e.g., with pocket/snap/push button connections), can be less comfortable and less easy in use. A higher level integration method by, e.g., weaving/knitting or embroidery of electronics yarns and of attached electronic components may be more difficult to separate, e.g. demanding hand-craftsmanship, and may hardly allow re-use of the electronics as the separation process can affect the function of the electronics. As a result the recycle process may be less economically viable.

Furthermore, it is desired that the garment including the electronic device is relatively comfortable to wear while enabling dedicated electronic functionalities. However, current wearable electronics configured for attachment to garments may be unsuitable for repeated use over a long period of time and/or may be uncomfortable to wear for more than a brief period of time. They may be difficult and expensive to manufacture, and are often rather fragile, preventing robust usage and washing. Typically, dedicated hardware (e.g. high pressure equipment) is needed for automatized removal of the wearable electronics from clothing making the removal process cumbersome.

Electronic devices integrated into clothing may be environmentally less friendly because of the used materials (e.g. metal particles). If they end up in the normal after-life-destinies of textile products, they can be shred and recycled into cleaning cloths or for use such as fibers for insulation products, upholstery, fiberboard, and mattresses and even re-woven into new clothing. However, the majority of clothing disposed of ends up in land fills. Generally, the metal contamination resulting from the electronics is detrimental. Additionally, electronic devices integrated into clothing may include expensive components so that the electronic devices may, even after the period for which a garment is used, represent a significant economic value.

### SUMMARY OF THE INVENTION

It is an object of the invention to provide for an electronic unit, a garment and a method that obviates at least one of the above mentioned drawbacks.

Additionally or alternatively, it is an object of the invention to provide for an electronic unit which can be removed or detached from a garment.

Additionally or alternatively, it is an object of the invention to provide for an electronic unit attachable to a garment which can be easily disposed and/or recycled.

Thereto, the invention provides for a releasable flexible multilayer electronic unit connectable to a garment comprising an encapsulation layer configured for encapsulating one or more electronic components, and an adhesion layer which is attached to the encapsulation layer and arranged for bonding the flexible multilayer electronic unit to the garment. The adhesion layer has different material properties than the encapsulation layer. The adhesion layer is a thermoplastic layer enabling attachment to a garment under influence of elevated temperature. The adhesion layer has material properties enabling debonding by means of a debonding process for removal of the electronic unit when subjected to predetermined conditions different than damage conditions for at least one of the encapsulating layer or the one or more electronic components. The adhesion layer is a heat release layer configured to debond under the influence of a debonding agent, when its temperature is elevated to a debonding temperature different than room temperature. The debonding temperature is below a damage temperature of the encapsulation layer and the one or more electronic components therein.

The debonding agent is selected to debond at a suitable temperature, different than and preferably lower than the bonding temperature. The multilayer electronic unit may form a stack of layers having different material properties, wherein the adhesion layer is configured to be connectable/attachable/bondable to a garment for holding the electronic unit and the garment together at least during normal use conditions. Advantageously, by using a thermoplastic material as a bonding material for the adhesion layer, an elevated temperature (cf. debonding temperature) can be effectively used as a trigger for releasing the electronic unit from the garment. A controlled release of the electronic unit can be obtained by subjecting it to debonding process conditions while avoiding damage to at least one of the encapsulating layer or the one or more electronic components. A debonding behavior of the adhesion layer is obtained by means of the environmentally-assisted conditions imposed by the debonding process without destructive treatment of at least one of the encapsulating layer or the one or more electronic components arranged therein, wherein the encapsulation layer and/or the electronic components are resistant to damage under the conditions of the debonding process (e.g. thermal, chemical, photochemical, electromagnetic or a combination thereof). In this way the harvesting of electronic units from garments, for instance for the purpose of recycling, may be improved.

The adhesion layer may be more sensitive to an elevated temperature than the encapsulation layer. Optionally, the encapsulation layer is substantially insensitive to the debonding temperature for the adhesion layer.

The thermoplastic adhesion layer can be reversible stretchable during normal use conditions, such as for example when wearing the electronic unit attached to the garment, when washing the electronic unit attached to the garment in a washing machine with an elevated temperature below the debonding temperature, etc.. Debonding can be effected by heating the adhesion layer to a debonding temperature under the influence of a debonding agent, thereby weakening the adhesive forces provided by the adhesion layer. The debonding agent can be hot water, optionally provided with a chemical weakener / plasticizer. Also in this example the encapsulation can be irresponsive to this plasticizer to ensure integrity of the encapsulated electronics.

The bonding strength of the adhesion layer may be weakened as a result of heating to the debonding temperature, such that mechanical friction in the washing machine may detach the electronic unit from the garment. The electronic unit can be effectively recovered after being exposed to a debonding process, such as a washing cycle.

The adhesion layer can be configured to be differently responsive to predetermined conditions of the debonding process, compared to the encapsulating layer, such as to effectively avoid damage to electronics of the electronic unit. The conditions imposed by the debonding process are sufficient for enabling removal of the electronic unit from the garment to which the electronic unit is attachable to.

The adhesion layer may be arranged to form a bonding interface between the encapsulation layer and the garment to which the encapsulation layer is to be attached, providing releasably securably bonding and debonding, wherein by means of heating to an elevated temperature a selective debonding can be obtained, under the influence of a debonding agent, upon reaching the debonding temperature for a certain period of time. The thermoplastic adhesion layer is configured to substantially soften and/or melt when heated to an elevated temperature near the debonding temperature, while the encapsulation layer can remain substantially undamaged. The debonding agent is configured to lower the glass temperature of the thermoplastic adhesion layer into a temperature region that is convenient in household conditions, e.g. for temperatures in the range of 50-100 degrees, more particular, 60-90 degrees Celcius. At the debonding temperature, it is permitted that the bond is separated. An advantage of this approach is that the heating of the encapsulation layer attached to the garment during debonding does not need to occur locally, or only in the region of the adhesion layer. The entire bonded structure including the electronic unit and the garment can be heated together, for example in a washing machine, an oven, etc.

Both in terms of economics and of sustainability it is beneficial to re-use at least a portion of the electronic components of the electronic unit attached to the garment. Additionally or alternatively, the electronic unit attached to the garment may be replaceable. The electronic unit released from the garment can be disposed, re-used or recycled. Advantageously, the separation of the electronic unit from the garment can be compatible with normal textile (waste) streams, so that more easily a re-use can be provided to electronic units attached to garments. Electronic units which are recovered by the debonding process may be re-used by for example re-attachment to a new or other garment. For example, the electronic unit may easily be replaced by an other electronic unit when desired. Also the garment from which the electronics are removed can be refurbished with new electronic patches, be reused as such or taken care of in the waste-stream more efficiently and leaving more possible regeneration of textile applications as the (metal) electronics are removed leaving more pure textile behind.

A firm attachment may be provided by the adhesion layer without requiring to exert a pulling or peeling force by the user for removal of the electronic unit from the garment.

Advantageously, the thermoplastic adhesion layer is melt-processable. The adhesion layer can be a thermoplastic adhesive configured to be attachable to a garment under influence of elevated temperature. A subsequent debonding can be achieved by means of an elevated temperature. The adhesion layer may be a polymer having a glass transition temperature, commonly designated as Tg. The glass temperature is a temperature region wherein a polymer goes from a glassy state to a flexible/rubbery state. Glass temperature in polymers can correspond to the transition from the solid state to the liquid state (or vice versa). The glass transition temperature is highly related to segmental chain motion, as polymers warm up. When the temperature of a polymer melt is cooled quickly the motion of polymer chain segments is greatly reduced. If the cooling rate is much larger than a relaxation time or re-orientation time of the polymer, it may be unable to volumetrically relax so that excess free volume is kept inside the polymer. This is referred to as a glassy state. At temperatures above Tg, polymer chains have greater mobility and larger segments of the polymer chain are able to re-orient therefore, they are able to achieve their equilibrium conformations which corresponds to an increase in free volume. Below Tg, polymer chain mobility is greatly decreased corresponding to a reduction in polymer free volume.

The thermoplastic adhesion layer may be configured to remain intact after release from the garment. Under the influence of an elevated temperature the thermoplastic adhesion layer may become softer, more easily allowing deformation or reshaping (cf. glass temperature) so as to enable attachment to a garment. Additionally, a pressure may be applied (e.g. hot press) for attaching the electronic unit to the garment by means of the adhesion layer. The thermoplastic adhesion layer may be configured to interlock to textile under these conditions. When heated during a thermal debonding process, the thermoplastic adhesion layer can be deformed without damage and thermosetting.

The electronic unit may be configured to be attached to a garment by means of the adhesion layer, wherein the electronic unit is configured to remain attached during normal use conditions. Normal use conditions may include, wearing the garment, storing the garment, washing the garment for example in a washing machine, dry cleaning the garment, etc. Release of the electronic unit may be triggered by employing a predetermined debonding temperature during a thermal debonding process.

Optionally, normal use conditions of the electronic unit attached to the garment by means of the adhesion layer involves washing, for example in a washing machine (laundry). During this normal use, although the temperature may be elevated compared to room temperature, the adhesion layer may be configured to provide sufficient adhesive force so that the electronic unit may remain attached to the garment.

Optionally, the flexible multilayer electronic unit forms a stand-alone electronic patch. The flexible multilayer electronic unit can be a thin film structure. The electronic unit is configured to provide a reversible integration onto the garment by means of the adhesion layer. The encapsulation layer may be at least partially insulating and may also help protect the one or more electronic components from external influences, for example detergents and liquids used for washing of the garment to which the electronic unit is attached, as well as provide protecting from scratching, etc., for instance also during said washing processes.

Optionally, the encapsulation layer is further sandwiched between other layers of the electronic unit. For example, a coating layer may be provided on top of the encapsulation layer. Additionally or alternatively, an additional layer may be provided between the adhesion layer and the encapsulation layer. Many variants of the multilayer electronic unit are possible. Advantageously, the encapsulation layer is arranged to provide a resistance to damage from washing, including preservation of at least electrical and elastic properties following repeated use of the garment and/or repeated washing cycles of the garment with the electronic unit attached thereto.

The electronic unit can be laminated into the textile during or after manufacturing of a (smart) garment. The lamination can be reversed (i.e. delamination) at the end-of-life phase of the garment to separate the flexible multilayer electronic unit from the garment to which the electronic unit is attached to or applied on. As indicated above, this delamination can be achieved by means of thermal, chemical, photochemical, or electromagnetic debonding processes optionally in combination with physical methods. It is appreciated that after delamination of the flexible multilayer electronic unit, this harvested electronic unit can be re-applied to a new garment, optionally be refurbishing the patch with the same or a different adhesion layer of choice. The electronic unit may also be removed before end of life, or may be replaced by another unit. The harvested electronic unit may be disposed and/or recycled.

Optionally, the electronic unit attached to a garment is machine washable. The garment including the electronic unit may be washed in a (machine) washing process without causing damage to the electronic unit or releasing the electronic unit from the garment. However, debonding may be triggered by certain conditions in the washing process, such as for instance temperature, duration, in combination with a debonding agent such as, chemicals or detergents, etc. Hence, a washing process with non-standard debonding conditions may be employed as a debonding process.

Optionally, the garment has a maximally indicated washing temperature to be used in a washing process, for example using a washing machine such as a drum washing machine, wherein the debonding temperature is above the maximal washing temperature for the garment. Optionally, this maximal indicated washing temperature corresponds to a damage washing temperature for the garment. In this way, it can be prevented that the electronic unit is accidently released from the garment during a washing process, since the conditions during the washing cycle resulting in release of the electronic unit would damage or deteriorate the garment.

Optionally, the encapsulation layer is made of thermoplastic polyurethane elastomers (TPU), silicones, PVB, EVA or the like. The material of the adhesion layer may also be a thermoplastic polyurethane material or a material of the same class as the material of the encapsulation layer. Other materials combinations may also be used.

Optionally, the material properties of the adhesion layer and the encapsulation layer are selected in such a way that under the predetermined conditions to which the electronic unit is subjected during the thermal, chemical, photochemical or electromagnetic debonding process for removal of the electronic unit from the garment, the encapsulation layer and/or the one or more electronic components remain substantially undamaged. The adhesion layer thus has material properties to enable detachment when subjected to the predetermined debonding conditions being different than damage conditions for the encapsulating layer or the one or more electronic components.

Optionally, the electronic unit is adhered/bonded to the garment by means of hot pressing or the like. Other suitable attachment methods may also be employed.

Optionally, the adhesion layer is configured to allow re-attachment after release from a garment by means of the debonding process. Re-attachment may for example be accomplished by hot pressing. In an example, the (thermoplastic) adhesion layer can flow and mechanically anchor (interlock) with the garment when heated while the flexible encapsulation layer is configured to prevent the (thermoplastic) adhesion layer from spreading too far. During the debonding process for removal/detachment of the electronic unit from the garment, it can be brought to a temperature at which the encapsulation layer has a retracting effect and returns the (thermoplastic) adhesion layer to its unformed shape. In such a case, the adhesion layer will not be dissolved and/or melted and is suitable for re-use (i.e. without having to use a new adhesion layer and/or glue).

It is appreciated that the adhesion layer can also be part of an encapsulation layer which can be configured to realize adhesion by lamination. The heat release layer may act as a heat-activated adhesion layer which enables a temperature or heat controlled release of the electronic unit, wherein debonding is heat-activated.

Optionally, the adhesion layer has material properties enabling lowering a minimum debonding temperature when subjected to at least one of an aqueous solution, steam, a solvent or a detergent.

Steam is a heat carrier which may facilitate release of the electronic unit. By means of steam, the electronic unit may be detached from the garment faster. Furthermore, heat can be applied more locally on the garment, i.e. at a location at which the electronic unit is attached. Optionally, the multilayer electronic unit is steam-permeable and/or water permeable so that the steam can reach the interface formed by the adhesion layer. Additionally or alternatively, steam may be applied through an opposite side of the garment at a location at which the electronic unit is attached to the garment. The fabric of the garment may allow steam to flow through it.

Optionally, the electronic unit is washable in a washing machine process, wherein the adhesion layer is configured to maintain a bond in the washing machine process operating below a predetermined washing temperature and debond in the washing machine process operating at or above a predetermined washing temperature, preferably at or above 50 °C, so that the warm water acts as a debonding agent..

For example if garments are washed at 40 °C in a machine washing process, the adhesion layer may be configured such that a temperature of 60 °C to 90 °C can be sufficient to induce separation. Other ranges are also possible.

Optionally, the adhesion layer is configured to maintain a bond in a washing machine process operating in a wash temperature range of the garment to which the electronic unit is to be attached, and to debond in a washing machine process operating above a wash temperature range of the garment to which the electronic unit is to be attached.

In an example, the debonding temperature is at least 10 °C above the maximal (indicated) washing temperature of the garment, preferably at least 15 °C, more preferably at least 20 °C. In this way it can be prevented that the electronic unit is accidently released from the garment in a washing process. The temperatures required for enabling a release would also have detrimental effect on the garment.

Optionally, wherein the encapsulation layer is made of an thermoplastic material, such as a thermoplastic polyurethane elastomer, and wherein the encapsulation layer has different material properties than the adhesion layer. Other materials can also be used for the encapsulation layer, such as polyvinyl butyral (PVB), thermoplastic polyurethane (TPU), etc.

Optionally, wherein the encapsulation layer is made of a thermoset material, such as a silicone. Silicone is a thermoset material which can not be softened at higher temperatures.

The adhesion layer can be made of a non-silicone material. Optionally, the adhesion layer is made of other materials such as polyvinyl butyral. Many variants are possible.

The encapsulation layer can be made out of a material being more resistant to the effects of an elevated temperature than the adhesion layer. The encapsulation layer may be configured to withstand the effects of the debonding temperature at which the adhesion layer is configured to release the encapsulation layer from the garment to which it was attached.

Optionally, both the encapsulation layer as the adhesion layer are made out of TPU although having different material properties (e.g. elasticity, temperature sensitivity, water sensitivity, steam sensitivity, etc.). The material properties of the encapsulation layer and the adhesion layer may be tuned such that the adhesion layer may enable separation from a garment without damaging at least the encapsulation layer. The flexible multilayer electronic unit may form a stack of TPU layers, wherein at least the adhesion layer has different material properties with respect to one of the other TPU layers of the electronic unit. Advantageously, the adhesion layer is configured to behave differently in the temperature domain compared to the encapsulation layer.

Optionally, the adhesion layer is a chemical release layer configured to cause debonding when subjected to a dedicated debonding chemical. The encapsulation layer is substantially damage insensitive to the dedicated debonding chemical.

The dedicated debonding chemical or debonding agent may be configured to affect the adhesive power of the adhesion layer.

Optionally, the adhesion layer is configured to debond in a washing machine process by application of a dedicated washing detergent. During the washing machine process the releasable flexible multilayer electronic unit is placed and/or moved in an aqueous solution comprising the dedicated washing detergent.

Optionally, the dedicated detergent is a cleaning agent.

Optionally, the dedicated detergent is an oxidizing detergent. An oxidizing detergent can be configured to oxidize the adhesion layer without destructive treatment of the encapsulating layer.

Optionally, the adhesion layer is configured to debond in a dry cleaning process using a dedicated solvent.

The encapsulation layer may be configured to be sufficiently chemical resistant so that the garment may be immersed in a dry-cleaning solution. The encapsulation layer may be resistant to damage from a dry cleaning process or exposure to a dry cleaning reagent. The conditions imposed during the dry-cleaning process may be sufficient for enabling debonding of the adhesion layer for releasing the electronic unit from the garment to which it is attached, while avoiding damage to the encapsulation layer or the one or more electronic components therein.

Optionally, the solvent is a non-hydrophobic solvent.

Optionally, the solvent is a perchloroethylene solvent.

Optionally, the adhesion layer is configured to debond when subjected to steam, for example by means of a steam iron.

The flexible multilayer electronic unit may have various dimensions, shapes and forms. Optionally, the flexible multilayer electronic unit has an elasticity approximately equal to an elasticity of the garment at an attachment location.

The encapsulation layer is configured to provide protection to electronics and conductive components of the electronic unit to a certain extent. Optionally, the encapsulation layer is a transparent protective layer. This protective layer may improve the resistance of the electronic components therein against environmental influences. Advantageously, the material of the protective layer is compatible with the electronic components arranged therein.

According to a further aspect, the invention provides for a garment having the releasable flexible multilayer electronic unit releasably attached thereto.

A flexible multilayer electronic unit may be capable of being bent and/or flexed during use. Additionally or alternatively, the flexible multilayer electronic unit may also allow stretching and/or expansion in one or more directions.

The flexible multilayer electronic unit may be substantially stretchable and/or conformable in one or more dimensions so as to maintain the comfort of the garment. The garment may include many types of clothing, such as for example pants, shirt, shorts, or various other types of apparel items or accessories.

The garment may be a flexible and/or compressive garment configured to continuously conform to a user's body when worn by the user. A flexible, compressive garment (e.g., shirt) may be configured to move with a user's body.

A flexible and stretchable multilayer electronic unit can easily be used with tight-fitting garments. Such tight-fitting garment may for instance facilitate remote measuring of length and/or shape variations of an object, e.g. a human body, and thus enable monitoring the condition and/or physiological performance of humans without causing discomfort or hindrance. For this purpose, the multilayer flexible electronic unit may comprise for example an elastane (e.g. spandex, lycra, elaspan, acepora, creora, dorlastan, linel, etc., or other polyether-polyurea copolymers) and/or a rubber (synthetic or natural). Other rubber-like materials may also be used.

The electronic components in or on the encapsulation layer may be at least partially rigid. However, due to the relatively small sizes, the multilayer electronic unit may still be substantially flexible. Advantageously, the electronic components are also flexible to some extent. For example, a flexible LED screen may be employed.

As indicated above, debonding may be promoted in various ways. A user friendly way of debonding is using a (drum) washing machine which is used in many households. Debonding may be triggered as a result of the temperature at which the garment holding the electronic unit is washed, without damaging treatment of the encapsulation layer or the one or more electronic components arranged therein.

The adhesion layer may enable bonding between the electronic unit and the garment by means of lamination. The adhesion layer may be arranged to provide interlocking to a textile of a garment, which is a porous material which allowing attachment by applying pressure (e.g. with elevated temperatures). The adhesion layer may partially penetrate in openings of the fabric of the textile resulting in interlocking. When the material of the adhesion layer becomes sufficiently soft, the adhesion layer may be released from the garment.

According to a further aspect, the invention provides for a method for releasing a flexible multilayer electronic unit connected to a garment. The flexible multilayer electronic unit comprises an encapsulation layer configured for encapsulating one or more electronic components, and an adhesion layer which is attached to the encapsulation layer and arranged for bonding the flexible multilayer electronic unit to the garment. The adhesion layer has different material properties than the encapsulation layer. The adhesion layer is a thermoplastic layer enabling attachment to a garment under influence of elevated temperature. The method includes initiating a debonding process for detaching the adhesion layer from the garment, wherein the adhesion layer has material properties enabling debonding for removal of the electronic unit when subjected to predetermined conditions without destructive treatment of at least one of the encapsulating layer or the one or more electronic components. The adhesion layer is a thermoplastic heat release layer configured to detach when its temperature is elevated to a debonding temperature different than room temperature. The debonding temperature is below a damage temperature of the encapsulation layer and the one or more electronic components therein.

Advantageously, the adhesion layer bonding the electronic unit to the garment can release/detach the electronic unit from the garment without damaging the electronic components and/or the encapsulation layer.

The method of lamination of electronics to a garment or textile can yield an unobtrusively integrated smart garment. The delamination can be achieved under conditions significantly different from the normal use case of wearing and washing garments. This method can be applied to bulk quantities of garments and may not demand manual labor. After separation the electronic unit can be refurbished if needed with a new lamination layer or used as such for hot pressing onto a new garment.

The adhesion layer can be a functional release layer which is configured to trigger a release of the electronic unit from the garment when subjected to specific debonding temperatures, i.e. thermal debonding process. A debonding temperature range may be influenced by means of one or more additional debonding processes, such as for example the use of water, steam, agents, solvents, detergents, electromagnetic radiation, light, microwaves etc. The debonding temperature range may hence be shifted.

The adhesion layer may be arranged for temporarily bonding the electronic unit to a garment, wherein debonding can be triggered at an elevated debonding temperature above room temperature and preferably above a maximum washing temperature for the garment.

Optionally, a minimum debonding temperature of the adhesion layer is lowered when subjected to at least one of an aqueous solution, steam, a solvent or a detergent.

Optionally, debonding of the adhesion layer is facilitated by subjecting the electronic unit to a chemical treatment, preferably including dissolving and/or changing the surface energies of the adhesion layer..

The adhesion layer is configured to enable release of the releasable electronic unit without substantially damaging the encapsulation layer and/or the one or more electronic components therein. Hence, an improved removable electronic unit can be obtained with the adhesion layer acting as a release layer when subjected to certain conditions (e.g. heat, temperature, humidity, chemical, etc.) imposed during the debonding process.

Optionally, debonding is achieved by: thermal treatment in combination with mechanical forces in a washing machine process at a predetermined washing temperature, preferably above 50 °C; wherein the debonding is further facilitated by means of at least one of the: chemical treatment in combination with mechanical forces in a washing machine process by application of a dedicated detergent, preferably an oxidizing detergent; or chemical treatment by means of dry cleaning the garment with the electronic unit attached thereto, preferably by means of a non-hydrophobic solvent.

Optionally, at least one of the releasable flexible multilayer electronic unit or garment is recycled after removal of said electronic unit.

Optionally, after removal of the electronic unit from the garment, the adhesion layer is re-applied onto the electronic unit for attachment to the same or a different garment.

Microwaves may for example be used to increase the temperature so as to achieve debonding. Electronic components encapsulated in the encapsulation layer may be sensitive to microwaves. In order to prevent damage to the electronic components, the electronic unit may at least partially be shielded against microwave radiation. In an example, the encapsulation layer has a buffer layer filled with a liquid (e.g. including water), which is arranged to protect the electronic components of the encapsulation layer against microwave radiation. The buffer layer may be configured to absorb microwave radiation at least to some extent. In this way, the adhesion layer may be sufficiently heated up by means of microwave radiation without damaging the encapsulation layer or the one or more electronic components therein. Optionally, the adhesion layer is configured to have a higher water absorption than the encapsulation layer. In this way, the adhesion layer can absorb more water and become more sensitive to microwave radiation than the encapsulation layer. In this way, an improved debonding can be obtained. In an example, the garment is washed in a washing machine and in a wet state subjected to microwave radiation.

Alternative debonding processes are also envisaged for achieving a similar function and result. For instance, the debonding process may be combined or split up into one or more processes imposing different conditions.

Additionally, the flexible multilayer electronic unit may also enable a modular design, wherein different electronic unit modules can be attached to a garment, and wherein optionally some of the different electronic unit modules may be configured to at least partially co-operate electronically, for example by wireless or wired communication. Due to the releasability, the electronic unit modules may be easily added or removed from the garment.

It will be appreciated that any of the aspects, features and options described in view of the multilayer electronic unit equally to the method and the described garment. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a flexible multilayer electronic unit;
Fig. 2 shows a schematic diagram of an embodiment of a flexible multilayer electronic unit;
Fig. 3 shows a schematic diagram of an embodiment of a garment with a flexible multilayer electronic unit attached thereto; and
Fig. 4 shows a schematic diagram of a method for releasing flexible multilayer electronic unit attached to a garment.

### DETAILED DESCRIPTION

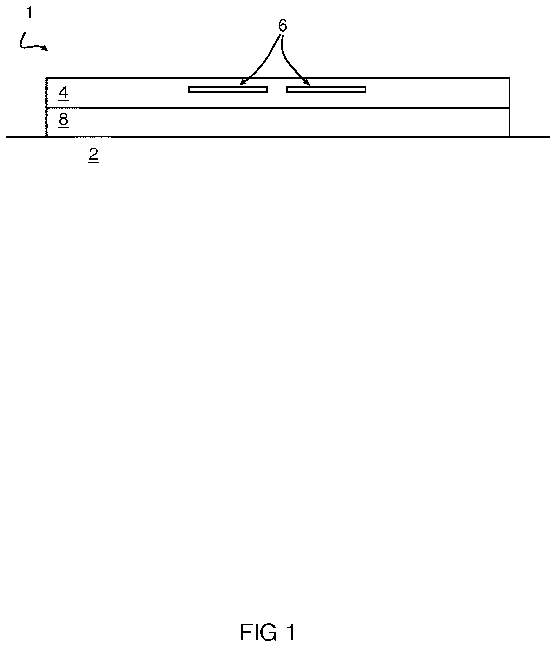

Fig. 1 shows a cross-sectional side-view of a schematic diagram of an embodiment of a releasable flexible multilayer electronic unit 1. The flexible multilayer electronic unit 1 is connectable/attachable to a garment 2. Only a portion of the garment to which the electronic unit is attached is shown. The multilayer electronic unit 1 comprises an encapsulation layer 4 configured for encapsulating one or more electronic components 6, and an adhesion layer 8 which is attached to the encapsulation layer 4 and arranged for bonding the flexible multilayer electronic unit 1 to the garment 2. The adhesion layer 8 forms an interlayer between the encapsulation layer 4 and the garment 2. In an alternative example, the multilayer electronic unit may comprise additional layers. For example, an additional layer may be arranged between the encapsulation layer 4 and the adhesion layer 8. The adhesion layer 8 has different material properties than the encapsulation layer 4. The adhesion layer 8 is a thermoplastic layer enabling attachment to a garment under influence of elevated temperature. The adhesion layer 8 has material properties enabling debonding by means of a thermal debonding process, optionally enhanced by at least one of a chemical, photochemical or electromagnetic debonding process for removal of the electronic unit 1 when subjected to predetermined conditions different than damage conditions for at least one of the encapsulating layer 8 or the one or more electronic components 6. In this way, the electronic unit 1 will not become damaged, at least to a substantial degree, when it is removed from the garment 2 during the debonding process.

The adhesion layer 8 may be configured on the one hand to enable removal of the electronic unit 1 from the garment 2 under the predetermined debonding conditions during the debonding process, without destructive treatment of other parts of the electronic unit 1, namely the encapsulation layer 4 and/or the one or more electronic components 6 which are arranged therein, and on the other hand to allow the electronic unit 1 to remain attached to the garment during normal conditions (e.g. including outdoor conditions). The normal conditions depend on the use of the garment to which the electronic unit 1 is attached to.

The adhesion layer 8 is a heat release layer which is configured to debond when its temperature is elevated to a debonding temperature different than room temperature, wherein the debonding temperature is below a damage temperature of the encapsulation layer 4 and the one or more electronic components 6 therein. When the temperature of the thermoplastic adhesion layer is increased, it may become more elastic or softer enabling debonding.

Debonding is activated through heat and can be further enhanced by chemicals, an acqueous solution, a solvent, a detergent, an agent, ultraviolet light, radiation, photo initiation, electron beam, humidity, enzymatic action, steam treatment, ultrasonic treatment, micro-wave, sub-cooling, vacuum treatment, solvent treatment, and the like, without destructive treatment of the encapsulation layer 4 and/or the one or more electronic components 6. Pressure may be applied to facilitate removal of the electronic unit 1 from the garment 2. For example the debonding process may be in combination with the use of pressure jets (liquid or gas).

Advantageously, the electronic unit 1 is arranged prevent detachment or damage during standard washing operations (e.g. in a drum washing machine). The adhesion layer 8 may be arranged to prevent detachment of the electronic unit 1 from the garment 2 during standard washing operations for the garment 2, while allowing removal during more severe washing operations for the garment 2, for example under conditions with higher washing temperatures.

The adhesion layer may provide a subsequent releasable bonding of the electronic unit to a garment. The adhesion layer can be selectively transformable under the influence of an elevated temperature from a bonding state, at which the electronic unit remains attached to the garment, to a release state, at which the electronic unit is released from the garment. In this way, a selectively releasable electronic unit can be obtained triggered by an elevated temperature. The adhesion layer may enable releasably securably bonding and debonding the adhesion layer from the

The electronic unit can be arranged for remaining attached in normal use by means of the adhesive strength provided by the adhesion layer. Normal use may include wearing the garment to which the electronic unit is attached, but also washing this garment with electronic unit, for example in a washing machine under normal washing conditions. Normal conditions may be understood as conditions under which the garment is to be washed without causing detrimental effects (e.g. damage). A washing method and/or washing conditions may be provided in a laundry tag, laundry label, care tag, or care label, usually attached to the garment. Such a laundry tag may indicate how a particular item should be best cleaned. A treatment indicated by the laundry tag may be understood as the maximum permitted treatment. Often, milder forms of treatment and lower temperatures than those indicated on the laundry tag are permitted. Advantageously, the debonding temperature of the adhesion layer is chosen to be above the washing temperature indicated in the laundry tag of the garment to which it is attached. The debonding temperature may be a trigger at which the adhesion layer released the electronic unit from the garment.

The adhesive strength provided by the adhesion layer can be reduced so that a relatively small force can lead to separation (e.g., centrifugal force or frictional forces in a washing machine under normal washing conditions). The release of the electronic unit from the garment to which it is attached can be triggered by an elevated temperature at or above the debonding temperature. In this way, the electronic unit attached to the garment may be washable and remain attached under normal washing conditions, while detach when washed at or above the debonding temperature. In this way, the electronic unit may be separated from the garment by washing the garment at a predetermined elevated temperature (debonding temperature). The debonding temperature may be above a maximum permitted washing/treatment temperature of the garment. Alternatively, the debonding temperature may be lower than a maximum permitted washing/treatment temperature of the garment. In this case, the electronic unit can be separated from a garment without damaging the garment.

The adhesion layer can be an outer layer of a stack of layers of the electronic unit. The adhesion layer can be adapted to debond when subjected to a debonding temperature in a predetermined temperature range, different from room temperature, for example above 50 °C, above 60 °C, above 70 °C, above, 80 °C, etc. Many temperature ranges including debonding temperatures are possible. The predetermined temperature range may be different than machine washing ranges for the garment on which the electronic unit is attached. The thermoplastic adhesion layer may become weakened (softer) under the influence of temperature. Furthermore, the thermal debonding process may be adjusted by means of water, steam, chemical agents, solvents or detergents.

Thermoplastic polyurethane (TPU) is an elastomer (polymer) which can be used for the adhesion layer 8. It is appreciated that the adhesion layer 8 or one or more other layers of the electronic unit (e.g. encapsulation layer 4) may be made of other materials (e.g. silicone) or other elastomers than TPU. A considerable number of physical property combinations may be provided by TPU, making it advantageous for use as the adhesion layer 8 and/or the encapsulation layer 4 of the electronic unit 1. TPU is a linear segmented block copolymer composed of hard and soft segments. The hard segment can be either aromatic or aliphatic. The soft segment can either be a polyether or polyester type, depending on the application. For example, a polyether-based TPU may be more suitable for wet environments while a polyester-based TPU may be more suitable for oil and hydrocarbon resistance. For even greater utility, the molecular weight, ratio and chemical type of the hard and soft segments can be varied. In this way, the material properties of a TPU adhesion layer may be tweaked for enabling debonding at a debonding temperature different than a damage temperature for at least the encapsulation layer 4, which optionally may also be made of TPU.

In an example, the adhesion layer 8 is made of Collano 36.004, a commercially available TPU with a debonding temperature of 75 °C. The encapsulation layer can for example be made of Framis 8210 or Sylguard 184 which remain intact under the debonding temperature for the adhesion layer 8. It is appreciated that other materials may also be employed.

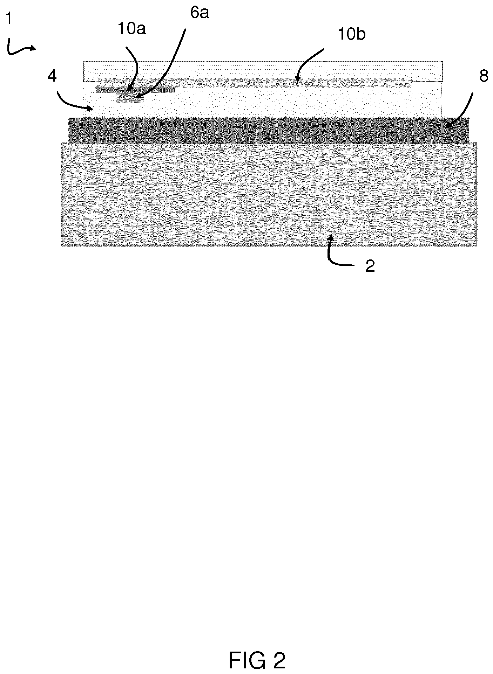

Fig. 2 shows a cross-sectional side-view schematic diagram of an embodiment of a flexible multilayer electronic unit 1 attached to a garment 2 by means of an adhesion layer 8 therebetween. An encapsulation layer 4 is arranged on top of the adhesion layer 8. In this example, the encapsulation layer 4 includes a an electronic component 6 in the form of a LED 6a. The LED 6a may for example be an organic LED or OLED providing a screen. The upper part of the encapsulation layer 4 may be configured to enable touch functionality, for instance by means of a capacitive touch screen. It is appreciated that other electronic components may also be employed, such as for example sensors, chips, etc. Furthermore, the encapsulation layer 4 may comprise a plurality of integrated and/or discrete electronic components 6. In this example, the encapsulation layer further comprises at least one additional component 10a and/or additional layer 10b therein. The electronic components 6 may be placed on a carrier layer.

The encapsulation layer 4 can be configured to provide protection for the encapsulated electronic components 6. In an example, the encapsulation layer 4 is made of thermoplastic polyurethane elastomers (TPU). Other materials having similar properties may also be used. For example, the encapsulation layer 4 may be made of silicones or the like. Preferably the adhesion layer 8 and the encapsulation layer 4 have different material properties so as to enable debonding of the adhesion layer 8 by means of the debonding process for removal of the electronic unit 1 when subjected to predetermined conditions different than damage conditions for at least one of the encapsulating layer 4 or the one or more electronic components 6.

The flexible multilayer electronic unit 1 forms a stand-alone electronic patch which can be attached relatively easily on a garment 2 by means of the adhesion layer 8. The electronic patch can be laminated onto textile during or after garment manufacturing. By means of the flexible multilayer electronic unit 1 attached to the garment, a smart/intelligent garment 2 can be obtained. The flexible multilayer electronic unit 1 may also further have means for communicating with other devices and/or electronic units attached to the same or different garment. This lamination of the electronic unit 1 can be reversed at the end-of-life phase of the garment 2 such as to separate the electronic unit 1 from the garment 2. Delamination can be achieved for example by thermal, chemical, photochemical or electromagnetic processes. An electromagnetic process may for instance employ electrical fields and/or magnetic fields for debonding. After delamination, the electronic unit 1 can be re-applied to the same or a different garment 2, for example a new garment. Optionally, the electronic unit 1 is first refurbished with a (new) adhesion layer 8 of choice. The adhesion layer 8 may be selected depending on material properties of the garment 2.

The electronic components 6 within the encapsulation layer 4 may be printed on a substrate. Other manufacturing processes may also be used, such as for example lithography, 3D printing, etc.

For example, in case the garment 2 becomes damaged, or in case the electronic unit 1 becomes damaged or no longer desired on the garment, the electronic unit 1 can be removed before end of life by performing a debonding process. During this debonding process the adhesion layer 8 may release the electronic unit 1. The two separated parts, namely the garment 2 and the electronic unit 1 can then for instance be replaced without having to dispose all parts. In this way, a garment 2 can be re-equipped with dedicated electronics. It may also be possible that at the end-of-life phase the garment 2 as well as the electronic unit 1 are disposed and recycled. The overall recycling process can be improved by means of the flexible multilayer electronic unit 1.

In this example, the material of the adhesion layer 8 is a thermoplastic polyurethane material of the same class as the material of the encapsulation layer 4. However, the material of the adhesion layer 8 is responding to conditions, e.g. circumstances like temperature, humidity and/or chemicals in a different way than the material of the encapsulation layer 4. In this way, a clearly discriminated process from normal use can be applied to separate the flexible multilayer electronic unit 1 from garment 2 and not destroy the (protective) encapsulation layer 4.

The material properties of the adhesion layer 8 and the encapsulation layer 4 need to be chosen such that under the predetermined conditions to which the electronic unit 1 is subjected during the thermal, chemical, photochemical or electromagnetic debonding process, for removal of the electronic unit 1 from the garment 2, the encapsulation layer 4 and/or the one or more electronic components 6 arranged therein remain substantially undamaged. Hence, the material properties of the adhesion layer 8 is chosen in such a way that the predetermined conditions to which the electronic unit 1 is subjected for detachment from the garment 2 are different than damage conditions for at least the encapsulating layer 4 or the one or more electronic components 6. For example, the adhesion layer 8 can be a heat release layer configured to cause debonding when its temperature is elevated to a debonding temperature. The debonding temperature is below a damage temperature of the encapsulation layer and the one or more electronic components therein. For example, in case a thermoplastic material is used as the material of the adhesion layer 8, plasticizing of the adhesion layer 8 material should take place at a lower temperature than when that is the case for the material of the encapsulation layer 4. Preferably, the debonding temperature is higher than the temperature employed during normal washing conditions, for example in a washing machine such as a drum washing machine. If, for example, garments are washed at 40 °C, the electronic unit 1 may be configured result in a separation between the electronic unit 1 and the garment 2 at a temperature of 60 or 90 °C, while avoiding damage to the encapsulation layer 4. The adhesion layer 8 (i.e. lamination layer) may be configured to melt at a lower temperature than the encapsulation layer 4.

A washing machine may be an apparatus arranged for washing laundry using frictional force between the laundry and wash water. One of the various kinds of washing machines is a drum washing machine which is used in many households. Hence, the electronic unit 1 may be easily removed at home by a user without requiring complex removal processes. Washing may be performed with water or an aqueous solution, for example comprising a detergent. As a result of the temperature of the water and/or aqueous solution, the adhesion layer 8 may be at least partially dissolved enabling detachment of the flexible multilayer electronic unit 1 from the garment, without destructive treatment of at least one of the encapsulation layer 4 or the electronic components 6 encapsulated within that layer of the electronic unit 1.

In an example, the adhesion layer 8 may be insoluble in cold water and soluble in hot water. The adhesion layer may be arranged to substantially dissolve such as to cause debonding when treated with hot water of at least 50 °C, preferably at least 60 °C, for instance in a (machine) washing process. In this way, the electronic unit can be easily removable during or after the washing operation under debonding conditions.

Additionally or alternatively, debonding may be achieved by use of a special detergent, such as for example an oxidizing agent affecting the adhesive power of the laminating layer to be applied in the washing process, for example after end of life of the garment 2 whereto the electronic unit 1 is attached.

The electronic unit 1 may be adhered to the garment by, for example, hot pressing. However other suitable methods may also be employed. For example, the electronic modules can be laminated in the hot press with TPU (Framis 8210 at approximately 140 °C, for approximately 2 minutes at approximately 2.8 bar, other process parameters are also possible). When washed at 40 °C the electronic unit 1 can remain attached on the garment 2. However, when washed at 50°C or higher, preferably 60°C or higher, the electronic unit 1 can delaminate from the garment 2 resulting in releasement or detachment.

Typically, the electronic unit 1 has a density lower than soaked textile garments 2. So when a relatively large amount of water is present, for example in a wash basin, the electronic unit 1 may float on the water whereas the wet garments 2 may tend to sink to the bottom or lower portions of the water basin.

The electronic unit 1 may be re-used after the lifetime of the garment. In this way, the harvested electronic unit 1 can be granted a second life on another garment 2, or on the same garment 2. In case the electronic unit 1 becomes damaged, for example due to a malfunction of one of the electronic components 6, or in case the electronic unit 1 is no longer desired on the garment 2, the electronic unit 1 can be removed before the end of life of the garment 2. The garment 2 can be continued in use without the electronic unit 1 or alternatively be refurbished with a new electronic unit 1. In this way, advantageously, the two separated parts, namely the garment 2 and the electronic unit 1, can be replaced without having to dispose all parts. In this way a garment 2 can be re-equipped with dedicated electronic units 1, if necessary. It may also be possible that at an end-of-life phase, the garment 2 as well as the electronic unit 1 are disposed and recycled in an environmentally conscious way without re-use. A more efficient recycling process can be obtained by using the flexible multilayer electronic unit 1.

The layers of the multilayer electronic unit 1 may have various dimensions. For instance, the thickness of the encapsulation layer 4 (e.g. for a single sided lamination layer to be used in double to cover top and bottom of the electronic module) may be in the range of 50 - 500 µm, preferably in the range of 100 - 250 µm. The thickness of the adhesion layer 8 may be in the range of 50 - 400 µm, preferably in the range of 100 - 200 µm. The garment 2 to which the multilayer electronic unit 1 is attachable may also have various dimensions. For example, the garment may have a thickness of 300-600µm at the location where the electronic unit 1 is attached to the garment 2 by means of the adhesion layer 8. Other layers may also be arranged on an upper or lower side of the encapsulation layer 4 and/or the adhesion layer 8. A sub-layer may be arranged to provide certain additional functionality for the multilayer electronic unit 1.

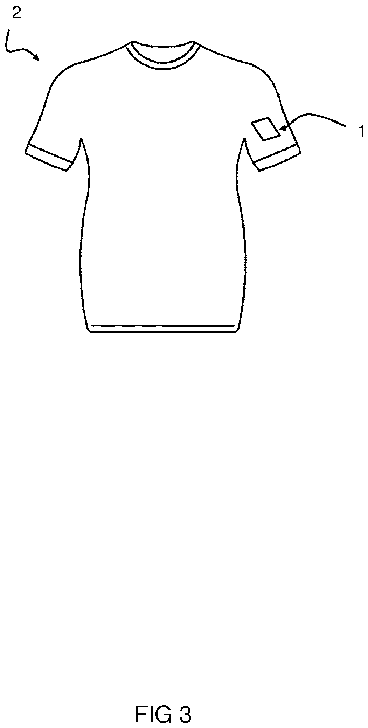

Fig. 3 shows a schematic diagram of an embodiment of a flexible multilayer electronic unit 1 attached to a garment 2. As in the previous embodiments, the electronic unit 1 is composed of a layer 4 of encapsulation material and a layer 8 of adhesion material. The adhesion layer 8 is configured to bond the flexible multilayer electronic unit 1 to the garment 2. As in the previous embodiments, the adhesion layer 8 has material properties enabling debonding by means of at least one of a thermal, chemical, photochemical or electromagnetic debonding process for removal of the electronic unit 1 when subjected to predetermined conditions different than damage conditions for at least one of the encapsulating layer 4 or the one or more electronic components 6.

In this example, the flexible multilayer electronic unit 1 forms a patch covering an outer portion of the garment 2. The formed combination of garment 2 and electronic unit 1 that can be separated when desired, e.g., after use or at the end of life of one of the two parts 1, 2. This can play an important role from both an economical and a sustainability point of view.

The garment 2 including the electronic unit 1 is machine-washable. Advantageously, the adhesion layer 8 can result in separation of the electronic unit 1 from the garment 2 by melting, dissolving or changing the surface energies, by means of: thermal treatment in combination with mechanical forces in the washing machine at a certain debonding temperature; by chemical treatment in combination with mechanical forces in the washing machine employing a dedicated detergent, such as for instance an oxidizing detergent; by chemical treatment by dry cleaning garments with non-hydrophobic solvents like perchloroethylene in which the lamination layer dissolves, cf. dry-cleaning process. Other similar or variants of debonding treatment processes may also be employed.

The electronic unit 1 may be used in for example sport garments (short use, for example detachment after use) or recyclable garments/electronics (long use). Different or the same debonding processes may be used for these two use cases. The releasability, washability, reusability of the electronic unit 1 suitable for attachment to a garment can be improved without using a mechanical connection, which may also be advantageous for the durability.

As mentioned, the electronic unit 1 described herein may be washed together with the garment 2 to which it is attached. A washing process may include placing the garment 2 with the electronic unit 1 attached thereto into an aqueous solution with a cleaning agent, moving the garment through the aqueous solution and the cleaning agent, rinsing (e.g. in water), and/or separating the garment 2 from the aqueous solution and cleaning agent (e.g. centrifuging), and drying the conformable garment.

The electronic unit 1 or at least the encapsulation layer 4 may be sufficiently water and soap resistant so that the garment 2 having the electronic unit 1 attached thereto may be immersed in an aqueous solution for washing. Such a garment 2 may be washed using standard washing methods and washing machines using an aqueous solution (water) and a cleaning agent such as a detergent. Furthermore, the garment 2 may be configured to withstand additional solutions such as a fabric softener, a cleaning solution comprising an enzyme configured to clean a garment 2, or other known cleaning methods. Moreover, the garment 2 may be sufficiently dryer resistant so that exposure of the garment 2 to a dryer, such as a conventional clothes drying machine, does not damage the encapsulation layer 4 or the one or more electronic components 6 inside the electronic unit 1. The encapsulation layer 4 may provide sufficient sealing for the one or more electronic components 6 so as to prevent liquid entry into electrically conductive or other water-sensitive portions of the one or more electronic components 6.

The electronic unit 1 is flexible and stretchable. In this way, the comfort for the user wearing the garment may be improved. Furthermore, the durability of the electronic unit 1 may be improved. For instance, electric wiring may not break from constant human movement when the garment is worn by the user.

In this example, the adhesion layer 8 provides a temperature-dependent adhesive bonding. However, other types of adhesion layers 8 may also be used, such as for example a light(pulse)-sensitive adhesive bonding. Chemical approaches may also be employed.

Advantageously, the electronic unit 1 can be removed without resulting in damage, for example without requiring tearing or cutting.

In an example, if the garment 2 is a tight-fitting shirt, the flexible multilayer electronic unit 1 may be positioned at a location of the shirt which, in use, presses against the body of the person wearing the shirt. This may have the advantage that certain user parameters may be measured more easily if the electronic unit 1 comprises one or more sensors. For example the breathing frequency of the person can be measured. The flexible multilayer electronic unit 1 may also be applied at a location of the shirt which, in use, presses against the back of the person wearing the shirt. This way, the periodically reoccurring bending of the person's back may be detected. Of course this type of garment 2 is also suitable for any other application for example not related to measuring bending or deforming of an object or a subject. For example, the electronic unit 1 may comprise one or more LEDs and/or a display.

The adhesive bond provided by the adhesion layer 8 may break down during the predetermined conditions in a debonding process, enabling the electronic unit 1 to be completely removed from the garment 2.

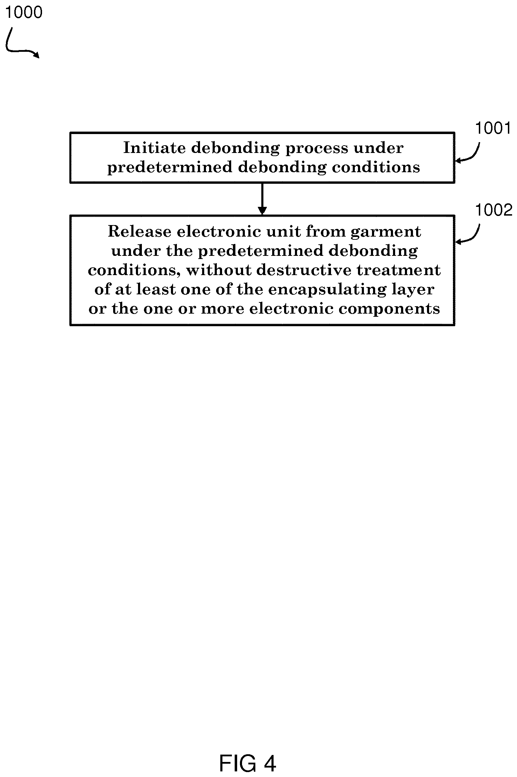

Fig. 4 shows a schematic diagram of a method 1000 for releasing a flexible multilayer electronic unit 1 attached to a garment 2. The flexible multilayer electronic unit 1 comprises an encapsulation layer 4 configured for encapsulating one or more electronic components 6, and a thermoplastic adhesion layer 8 which is attached to the encapsulation layer 4 and arranged for bonding the flexible multilayer electronic unit 1 to the garment 2. The thermoplastic adhesion layer 8 has different material properties than the encapsulation layer 4. The adhesion layer 8 enables attachment to a garment under influence of elevated temperature. In a first step 1001, a thermal debonding process is initiated which can optionally be enhanced by means of at least one of a chemical, photochemical or electromagnetic debonding process for detaching the adhesion layer 8 from the garment 2. In a second step 1002, the electronic unit 1 is released from the garment under the predetermined temperature debonding conditions. The adhesion layer 8 has material properties enabling debonding for removal of the electronic unit 1 when subjected to predetermined conditions without destructive treatment of at least one of the encapsulating layer 4 or the one or more electronic components 6.

As a result, electronic units 1 from electronic garments 2 may be re-used, which is beneficial both in terms of economics and of sustainability. Advantageously, the separation of the electronic unit 1 from the garment 2 is compatible with normal textile waste streams. Only little adjustments to the textile waste streams may be required. In this way, the recycling process may be significantly improved.

For achieving a debonding by means of heat treatment, a certain (minimum) debonding temperature may need to be achieved within the adhesion layer 8. The encapsulation layer 8 may be made of a material enabling prevention of damage at least at the minimum debonding temperature. The temperature of the electronic unit 1 can be increased above its debonding temperature without causing damage to the encapsulation layer 4 or the one or more electronic components 6. In this way, damage or deterioration can be prevented when the electronic unit 1 is released from a garment 2. Hence, a damage temperature of the encapsulation layer 8 and/or the electronic components 6 is higher than the minimum debonding temperature needed for obtaining debonding of the adhesion layer 8.

The garment 2 may be any type of clothing item or may be any type of apparel accessory used for or configured for a specific purpose. The garment may be configured to house the electronic unit. Garments may be tops, trousers, skirts, dresses, suits, uniforms, outerwear, underwear, lingerie, footwear, headwear, neckwear, nightwear, swimwear, accessories, etc. Examples are a shirt, a blouse, a coat, a jacket, a top, a tank top, a compression shirt, an undershirt, a long-sleeved shirt, an over-shirt, a polo shirt, a short-sleeved shirt, a T-shirt, a turtleneck shirt, a V-neck shirt, an undershirt, a bottom, shorts, a pair of trousers, leggings, pants, high water pants, slim-fit pants, jeans, dress pants, a sundress, shorts, a hand wear, a glove, feet glove, a mitten, a headwear, a hat, a hood, a helmet, a footwear, a boot, a foot glove, a shoe, a sock, a full body outfit, a leotard, a jumpsuit, pajamas, a robe, swimwear, underwear, a scarf, a specialized worker outfit, an ankle-lace, a bracelet, a bra, a camisole, a flexible screen, a hearing aid, a microphone, a necklace, a speaker, a tie, a belt, a watch, athletic wear, fire and safety wear, military wear, personal protection wear, doctor outfit, patient wear, recreation wear, etc. Various other garments may also be used. The garment 2 with the electronic unit 1 attached thereto may be worn under a user's regular clothes or it may be worn on the outside where it may be visible to others.

The flexible multilayer electronic unit 1 may be arranged to provide a wide range of functionalities. Various electronic components 6 may be used. The electronic unit may for instance comprise a sensor, such as a body sensor, an accelerometer, a gyroscope, a magnetoscope, a temperature sensor, an elongation sensor, a photosensor, a microphone, etc. Many sensory parameters may be detected such as for example, a user's heart rate, skin conductivity, respiratory rate, movement, motion, temperature, position in a space, proximity, flexibility, movement, velocity, acceleration, pulse, moisture, pH, humidity, elongation, tidal volume, inspiratory time, expiratory time, perspiration, stress, glucose level, resistance, impact, speed, electrical activity, arterial oxygen saturation, posture, relative motion between limbs and trunk, cadence, location, responses to transdermal activation, electrical activity of the brain, electrical activity of muscles, arterial oxygen saturation, muscle oxygenation, oxyhemoglobin concentration, deoxyhemoglobin concentration, etc. Other electronic components 6 are also possible such as a LED, a screen, a flexible screen (e.g. organic LED), a global positioning system or the like, a microchip, a memory, a processor, a solid state drive, interactive components and sensors, feedback electronics, a touch screen, proximity sensor, a camera, etc. The electronic unit 1 may comprise an electronic module arranged for enabling communication of a sensor with other electronic components, electronic devices and/or one or more other electronic units 1. The communication may be realized via wired or now known long range, medium range, and/or short range wireless application and communication protocols that include but are not limited to WIFI, Internet, LAN, near field communication, radio frequency communication, infrared communication, Bluetooth, LTE, GSM, WAP, WiMAX, WLAN, WPAN, wide band or any other wireless data communication systems, versions, and/or protocols. In this way, the electronic unit 1 may be allowed to work standalone or together.

When a feature or element is herein referred to as being "on" another feature or element, it can be directly on the other feature or element or intervening features and/or elements may also be present. In contrast, when a feature or element is referred to as being "directly on" another feature or element, there are no intervening features or elements present. It will also be understood that, when a feature or element is referred to as being "connected", "attached" or "coupled" to another feature or element, it can be directly connected, attached or coupled to the other feature or element or intervening features or elements may be present. In contrast, when a feature or element is referred to as being "directly connected", "directly attached" or "directly coupled" to another feature or element, there are no intervening features or elements present. Although described or shown with respect to one embodiment, the features and elements so described or shown can apply to other embodiments.

Terminology used herein is for the purpose of describing particular embodiments only and is not intended to be limiting of the invention. For example, as used herein, the singular forms "a", "an" and "the" are intended to include the plural forms as well, unless the context clearly indicates otherwise. It will be further understood that the terms "comprises", "comprising", "includes" and/or "including" when used in this specification, specify the presence of stated features, steps, operations, elements, and/or components, but do not preclude the presence or addition of one or more other features, steps, operations, elements, components, and/or groups thereof. As used herein, the term "and/or" includes any and all combinations of one or more of the associated listed items and may be abbreviated as "/".

Spatially relative terms, such as "under", "below", "lower", "over", "upper", "above", "top", "bottom" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if a device in the figures is inverted, elements described as "under" or "beneath" other elements or features would then be oriented "over" the other elements or features. Thus, the exemplary term "under" can encompass both an orientation of over and under. The electronic unit 1 may be otherwise oriented (rotated 90 degrees or at other orientations) and the spatially relative descriptors used herein interpreted accordingly. Similarly, the terms "upwardly", "downwardly", "vertical", "horizontal" and the like are used herein for the purpose of explanation only unless specifically indicated otherwise.

As used herein in the specification and claims, including as used in the examples and unless otherwise expressly specified, all numbers may be read as if prefaced by the word "about" or "approximately," even if the term does not expressly appear. The phrase "about" or "approximately" may be used when describing magnitude and/or position to indicate that the value and/or position described is within a reasonable expected range of values and/or positions. For example, a numeric value may have a value that is +/-0.1% of the stated value (or range of values), +/-1% of the stated value (or range of values), +/-2% of the stated value (or range of values), +/-5% of the stated value (or range of values), +/-10% of the stated value (or range of values), etc. Any numerical range recited herein is intended to include all sub-ranges subsumed therein.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the spirit and scope of the appended claims. Further, many of the elements that are described are functional entities that may be implemented as discrete or distributed components or in conjunction with other components, in any suitable combination and location. Optional features of various device and system embodiments and methods may be included in some embodiments and methods and not in others.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A releasable flexible multilayer electronic unit connectable to a garment comprising an encapsulation layer configured for encapsulating one or more electronic components, and an adhesion layer which is attached to the encapsulation layer and arranged for bonding the flexible multilayer electronic unit to the garment, the adhesion layer having different material properties than the encapsulation layer, wherein the adhesion layer is a thermoplastic layer enabling attachment to a garment under influence of elevated temperature, wherein the adhesion layer has material properties enabling debonding by means of a debonding process under the influence of a debonding agent, for removal of the electronic unit when subjected to predetermined conditions different than damage conditions for at least one of the encapsulating layer or the one or more electronic components, wherein the adhesion layer is a heat release layer configured to debond when its temperature is elevated to a debonding temperature different than room temperature, wherein the debonding temperature is below a damage temperature of the encapsulation layer and the one or more electronic components therein.

2. Releasable flexible multilayer electronic unit according to claim 1, wherein the adhesion layer has material properties enabling lowering a minimum debonding temperature when subjected to the debonding agent.

3. Releasable flexible multilayer electronic unit according to claim 1 or 2, wherein the electronic unit is washable in a washing machine process, wherein the adhesion layer is configured to maintain a bond in the washing machine process operating below a predetermined washing temperature and debond in the washing machine process operating at or above a predetermined washing temperature, preferably at or above 50 °C.

4. Releasable flexible multilayer electronic unit according to claim 1, 2 or 3, wherein the adhesion layer is configured to maintain a bond in a washing machine process operating in a wash temperature range of the garment to which the electronic unit is to be attached, and to debond in a washing machine process operating above a wash temperature range of the garment to which the electronic unit is to be attached, the debonding agent being at least one of an aqueous solution, steam, a solvent or a detergent.

5. Releasable flexible multilayer electronic unit according to any one of the preceding claims, wherein the encapsulation layer is made of an thermoplastic material, such as a thermoplastic polyurethane elastomer, and wherein the encapsulation layer has different material properties than the adhesion layer.

6. Releasable flexible multilayer electronic unit according to any one of the preceding claims, wherein the encapsulation layer is made of a thermoset material, such as a silicone.

7. Releasable flexible multilayer electronic unit according to any one of the preceding claims, wherein the adhesion layer is configured to cause debonding when further subjected to a dedicated debonding chemical, wherein the encapsulation layer is substantially damage insensitive to the dedicated debonding chemical.

8. Releasable flexible multilayer electronic unit according to claim 7, wherein the adhesion layer is configured to debond in a washing machine process by application of a dedicated washing detergent, wherein during the washing machine process the releasable flexible multilayer electronic unit is placed and/or moved in an aqueous solution comprising the dedicated washing detergent.

9. Releasable flexible multilayer electronic unit according to claim 8, wherein the dedicated detergent is an oxidizing detergent.

10. Releasable flexible multilayer electronic unit according to any one of the preceding claims, wherein the adhesion layer is configured to debond in a dry cleaning process using a dedicated solvent.

11. Releasable flexible multilayer electronic unit according to claim 10, wherein the solvent is a non-hydrophobic solvent.

12. A garment having a releasable flexible multilayer electronic unit according to any one of the preceding claims releasably attached thereto.

13. Method for releasing a flexible multilayer electronic unit connected to a garment, wherein the flexible multilayer electronic unit comprises an encapsulation layer configured for encapsulating one or more electronic components, and an adhesion layer which is attached to the encapsulation layer and arranged for bonding the flexible multilayer electronic unit to the garment, the adhesion layer having different material properties than the encapsulation layer, wherein the adhesion layer is a thermoplastic layer enabling attachment to a garment under influence of elevated temperature, the method including initiating a debonding process for detaching the adhesion layer from the garment, wherein the adhesion layer has material properties enabling debonding for removal of the electronic unit when subjected to predetermined conditions without destructive treatment of at least one of the encapsulating layer or the one or more electronic components, wherein the adhesion layer is a thermoplastic heat release layer configured to detach when its temperature is elevated to a debonding temperature different than room temperature, wherein the debonding temperature is below a damage temperature of the encapsulation layer and the one or more electronic components therein.

14. Releasable flexible multilayer electronic unit according to claim 13, wherein a minimum debonding temperature of the adhesion layer is lowered when subjected to at least one of an aqueous solution, steam, a solvent or a detergent.

15. Method according to claim 13 or 14, wherein debonding of the adhesion layer is facilitated by subjecting the electronic unit to a chemical treatment, preferably including dissolving and/or changing the surface energies of the adhesion layer.

16. Method according to claim 13, 14 or 15, wherein debonding is achieved by:
thermal treatment in combination with mechanical forces in a washing machine process at a predetermined washing temperature, preferably above 50 °C;
wherein the debonding is further facilitated by means of at least one of the:
chemical treatment in combination with mechanical forces in a washing machine process by application of a dedicated detergent, preferably an oxidizing detergent; or
chemical treatment by means of dry cleaning the garment with the electronic unit attached thereto, preferably by means of a non-hydrophobic solvent.
